# DEMANDE DE BREVET EUROPEEN

(11) **EP 0 972 611 A1**
(43) Date de publication de la demande: **19.01.2000**
(21) Numéro de dépôt: 99450014.8
(22) Date de dépôt: 06.07.1999
(51) Int. Cl.: B23Q 7/10

(54) **Dispositif de stockage et de transfert de produits unitaires**

(30) Priorité: 07.07.1998 FR 9808851
(71) Demandeur: Société Technique d'Automatismes et d'Ensembles à Ressorts - STAER, Société à Responsabilité Limitée, Technopole, 87069 Limoges (FR)
(72) Inventeur: Meynieux, Jean, 87000 Limoges (FR)
(74) Mandataire: Thébault, Jean-Louis

(57) **Abrégé**

L'objet de l'invention est un dispositif de stockage et de présentation de produits (16) unitaires tels que des ressorts, caractérisé en ce qu'il comprend un support (14) mobile en rotation et en translation, muni de moyens individuels de réception de ces produits (16), disposés suivant un chemin en forme de spirale centrée par rapport à l'axe de rotation passant par le centre du support, lesdits moyens individuels étant espacés le long de ce chemin avec un pas p.

L'invention a aussi pour objet un dispositif de transfert incluant ce dispositif de stockage et de présentation.

## Description

La présente invention concerne un dispositif de stockage et de présentation de produits unitaires tels que des ressorts et un dispositif associé de transfert de ces produits.

Dans le milieu industriel, pour la fabrication d'articles sur chaîne, il est souvent nécessaire d'introduire un produit unitaire de petite taille tel qu'un ressort par exemple, au moyen d'un automate. L'automate permet en effet de gagner du temps et de supprimer une tâche ingrate. Par contre, il requiert une alimentation en produits à une cadence donnée et avec une précision suffisante.

Les produits de petite taille avec des formes complexes comme un ressort pose aussi le problème du stockage. Dans certains cas, il est possible de saisir aisément les produits en vrac, un à un, mais la plupart du temps, c'est exactement l'inverse. Les ressorts sont emmêlés et le tri se révèle impossible. Dans d'autres cas, le simple fait de toucher les produits risque de les oxyder. Certains ressorts ont des forces de rappel tellement faibles que toute traction pour sortir le ressort de la masse peut engendrer un dépassement de la limite élastique, le condamnant au rebut. Pour certaines applications, les produits doivent subir un traitement thermique en sortie de fabrication si bien qu'ils doivent être disposés séparés les uns des autres.

Aussi pour répondre à ces impératifs, il faut que les produits soient disposés sur des supports individuels ou dans des logements d'un plateau, en fonction des profils, ceci dès la sortie de fabrication.

Ainsi pour les ressorts, ceux-ci sont fabriqués au moyen d'une machine particulière soit chez le ressortier, soit directement dans l'usine de fabrication d'articles, puis placés directement dans les alvéoles d'un plateau de stockage. De tels plateaux sont en matière plastique mince, thermoformée ou moulée, de forme rectangulaire avec des alvéoles disposées suivant les axes, longitudinal et transversal, dudit plateau.

Ces plateaux sont gerbés et transportés jusqu'au lieu de pose où ils sont utilisés directement comme support de distribution.

Ces plateaux rectangulaires sont déposés en référence, grâce à des moyens de calage, sur une table dite X/Y qui assure le déplacement dudit plateau suivant un repère orthonormé. Par déplacement suivant les coordonnées x/y, il est possible d'atteindre toutes les alvéoles et donc tous les produits, un par un.

Il suffit ensuite de changer les plateaux au fur et à mesure de la consommation, ce qui est dévolu à un opérateur mais cette tâche est limitée en temps et le cycle de changement est généralement assez long si bien que l'opérateur est libre d'exercer une autre activité parallèle.

Un robot manipulateur extérieur est à même d'être programmé pour venir saisir chaque produit individuellement.

Un tel agencement présente des inconvénients, tout d'abord celui du coût. En effet, les machines de type robot et table X/Y sont très chères et requièrent une maintenance certaine.

De plus, le plateau de stockage est également encombrant par rapport au nombre de produits stockés et il faudrait pouvoir améliorer la densité.

Compte tenu de la densité actuelle des produits, il faut un très grand nombre de plateaux et ceux-ci sont fabriqués dans un matériau mince pour permettre un usage unique mais le corollaire est une très faible rigidité, insuffisante pour permettre une bonne manipulation.

On connaît par le brevet GB-A-1 489 180 un dispositif pour supporter des éléments dans les chaînes de montage comme des écrous pour donner un exemple. Ces éléments sont sortis d'un distributeur à vibrations du type bol vibrant qui alimente à trop grande vitesse les utilisateurs. Aussi, les éléments sont stockés dans un réceptacle intermédiaire qui est un plateau muni de trous.

Les trous recevant les éléments sont disposés suivant une spirale. Une alimentation par tube et en utilisant la gravité permet de charger les trous régulièrement espacés suivant la spirale du plateau. Un doigt indexeur permet de déplacer le plateau pas à pas, au moyen de trous répartis sous le plateau de façon strictement identique aux trous de réception des éléments.

Pour retirer les éléments lors de l'utilisation, le plateau chargé est disposé sur un plateau muni de trous dans lesquels un doigt indexeur, à déplacement alternatif permet de faire tourner le plateau pas à pas. Ce doigt indexeur est déplacé en translation par deux pistons alternatif mus par de l'air comprimé. Cet air comprimé assure aussi les mouvements d'escamotage du doigt lorsque celui-ci est déplacé, à l'encontre d'un ressort de rappel.

Par contre si le principe général d'un stockage d'éléments dans des logements répartis suivant une spirale est acquis, aucune information n'est donnée dans ce brevet quant aux déplacements pour assurer un suivi de la spirale tant à la préhension des éléments que pour entraîner les plateaux. Seules sont données des indications concernant le déplacement d'un trou à un autre mais il est impossible de suivre une spirale de cette façon.

Le dispositif de stockage selon la présente invention pallie ces inconvénients et propose un dispositif qui fonctionne avec tous les composants nécessaires pour sa mise en oeuvre. Ce dispositif permet d'augmenter fortement la densité de produits par plateau, de réduire l'encombrement, de maintenir la précision requise pour une manipulation par un automate, de faciliter la prise des produits grâce à une grande rigidité, de diminuer le prix et les frais d'entretien. Quant au dispositif de préhension associé, il présente l'intérêt premier d'être combiné au dispositif de stockage pour ne requérir qu'un seul moyen de motorisation pour l'ensemble des pièces en mouvement, ce qui réduit le prix de revient et qui permet de disposer d'un même ensemble sur le lieu de fabrication des produits et sur le lieu de dépose des produits stockés.

A cet effet, selon l'invention, le dispositif de stockage et de présentation de produits unitaires tels que des ressorts, est muni de moyens individuels de réception de ces produits, disposés suivant un chemin en forme de spirale centrée par rapport à l'axe de rotation passant par le centre du support, lesdits moyens individuels étant espacés le long de ce chemin avec un pas p et ce dispositif se caractérise en ce qu'il comprend un support mobile en rotation et en translation.

Ce dispositif comprend des moyens d'entraînement en rotation pas à pas et des moyens de guidage et d'entraînement en translation du support.

Selon un mode de réalisation, les moyens d'entraînement en rotation pas à pas comprennent des pions d'entraînement au pas p, disposés sous la face inférieure du support, suivant un chemin en forme de spirale centrée par rapport à l'axe de rotation passant par le centre du support, ces pions d'entraînement étant prévus pour coopérer avec une vis d'entraînement.

Les moyens de guidage et d'entraînement en translation du support sont composés d'une gorge ménagée sur la face inférieure du support, suivant un chemin en forme de spirale, centrée avec l'axe de rotation passant par le centre du disque et décalée par rapport au chemin en forme de spirale et d'un doigt de guidage, fixe.

Selon un agencement spécifique, le support est monté sur un arbre libre en rotation lui-même porté par une platine de translation, libre en translation.

Selon un mode de réalisation différent, le support comprend un disque et une feuille mince amovible reçue sur ce disque et munie des moyens individuels de réception des produits unitaires.

Selon un autre mode, le support comprend un disque supérieur et un disque inférieur, portés par le même arbre et indexés et fixe en rotation l'un par rapport à l'autre.

L'invention couvre aussi un dispositif de transfert intégrant un tel dispositif de stockage et de présentation, dispositif de transfert qui comprend un bâti, un moto-réducteur, des moyens, communs d'entraînement, un manipulateur muni d'une tête de préhension.

Ces moyens communs d'entraînement comprennent un pignon mené, une chaîne de distribution, une came coaxiale audit pignon mené qui coopère avec une croix de malte qui entraîne le support, un pignon menant qui engrène avec ladite chaîne de distribution, solidaire de moyens de mise en mouvements synchronisés du manipulateur en translation verticale et en rotation.

Les moyens de mise en mouvements synchronisés comprennent des moyens de mise en rotation d'un cylindre munis d'au moins une rampe prévue pour recevoir un axe solidaire du manipulateur en sorte de déplacer le manipulateur entre deux positions haute et basse et deux positions angulaires, d'un moyen de rappel élastique travaillant à la torsion, solidaire du manipulateur, d'un moyen de rappel élastique travaillant à la compression interposé entre le bâti et le manipulateur.

La présente invention est maintenant décrite selon un mode de réalisation particulier, non limitatif, en regard des dessins annexés sur lesquels les différentes figures représentent :
- figure 1, une vue schématique, en élévation, du dispositif de stockage et de présentation ainsi qu'un dispositif de transfert associé,
- figure 2, une vue en élévation latérale d'un mode de réalisation particulier du dispositif de stockage et de présentation, intégré dans un dispositif de transfert,
- figures 3A et 3B, une vue de dessus et en coupe transversale médiane du disque de stockage et d'une partie des moyens de présentation,
- figure 4, une vue de dessus du dispositif de stockage intégré dans le dispositif de transfert,
- figure 5, une vue de dessus partielle de la répartition des mouvements,
- figure 6, une vue de dessous partielle montrant la commande de la pince de préhension,
- figure 7, une vue de détail de la pince de préhension et de son moyen de commande,
- figure 8, une vue de détail de la vis de commande du mode de réalisation préféré du dispositif de stockage et de transfert selon l'invention, et
- figure 9, une vue de détail des mouvements du bras manipulateur.

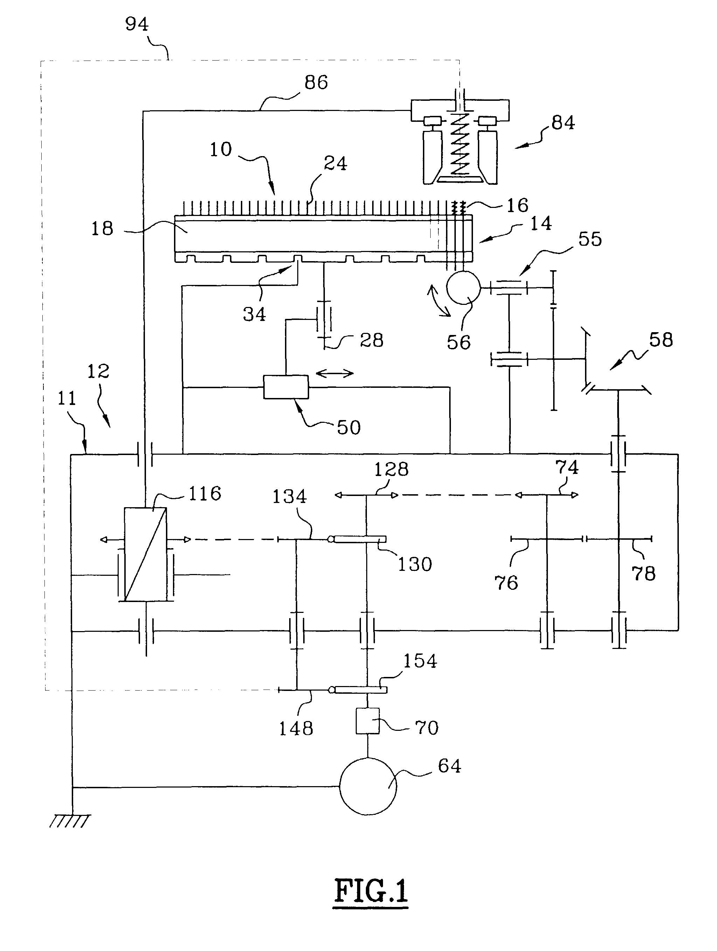

Sur la figure 1, on a représenté schématiquement un dispositif 10 de stockage et de présentation et un dispositif de transfert 12 intégrant le dispositif de stockage et de présentation, monté dans un bâti 11.

Le dispositif de stockage comprend un support 14 de produits 16, en l'occurrence de ressorts en épingle pour donner un contenu concret mais non limitatif à la description.

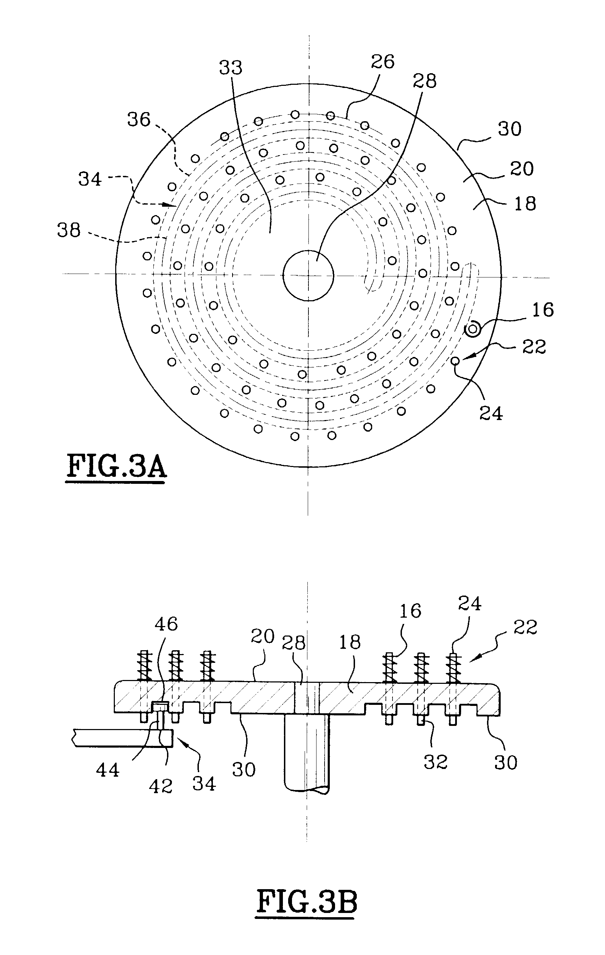

Ce support est détaillé sur la figure 3A et se présente sous la forme d'un disque 18 muni sur la face supérieure 20 de moyens 22 individuels de réception des produits 16, à savoir des pions 24 de réception pour les ressorts pris en exemple. Ces pions 24 de réception sont disposés suivant un chemin 26 en forme de spirale centrée sur un arbre 28 de rotation, recevant de façon amovible le disque, confondu avec l'axe de rotation passant par le centre du disque. Ces pions sont espacés le long de ce chemin en forme de spirale avec un pas p.

On note que ces pions 24 de réception, dans ce mode préférentiel retenu, traversent le plateau pour faire saillie sous la face inférieure 30 du disque pour constituer des pions 32 d'entraînement, avec le même pas p.

La forme des pions 24 de réception est bien entendu adaptée au profil du produit à recevoir afin d'assurer un maintien dans une position donnée, à orientation adaptée par rapport au disque.

Le profil des pions 32 d'entraînement est cylindrique pour la simplicité de réalisation.

Le disque porte aussi un logement 33 d'indexation qui se place sur un index non représenté porté par l'arbre 28.

Le dispositif de stockage et de présentation comprend des moyens 34 guidage et d'entraînement en translation du disque. Ces moyens sont composés d'une gorge 36 ménagée sur la face inférieure 30. Cette gorge a également un chemin 38 strictement identique au chemin 26, c'est à dire en forme de spirale centrée sur l'arbre 28 de rotation, confondu avec l'axe de rotation passant par le centre du disque. Ce chemin 38 est seulement décalé pour être situé exactement sur la ligne médiane 40 du chemin 26 en spirale.

La gorge 36 est prévue pour coopérer avec un doigt 42 de guidage, fixe. Ce doigt de guidage se présente sous la forme d'un axe 44 sur lequel un galet 46 est monté libre en rotation, ce galet étant de dimensions adaptées à celles de la gorge.

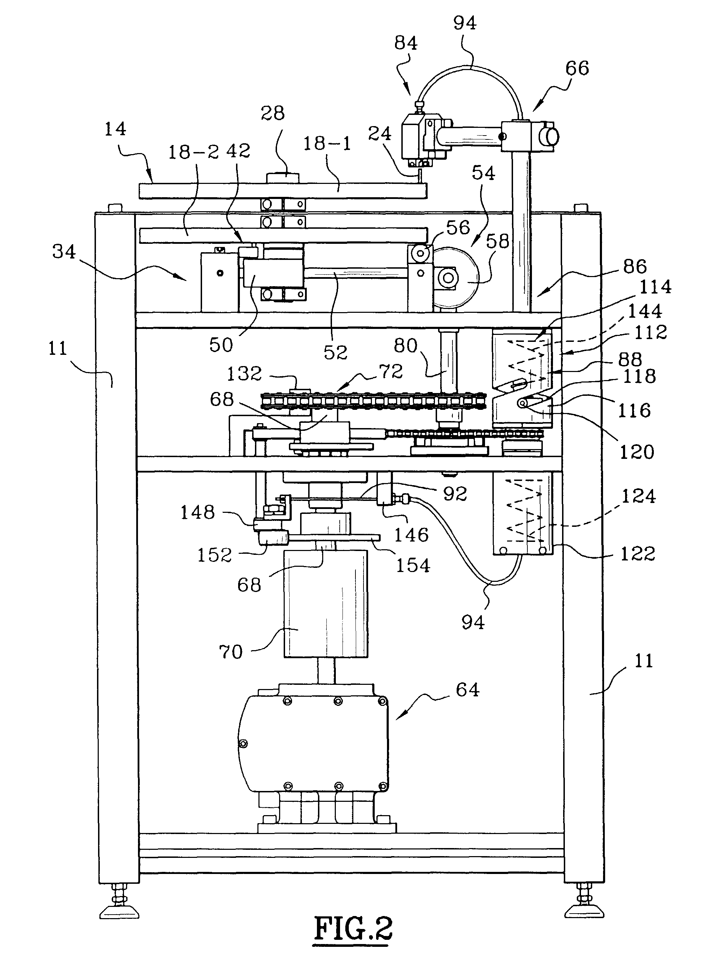

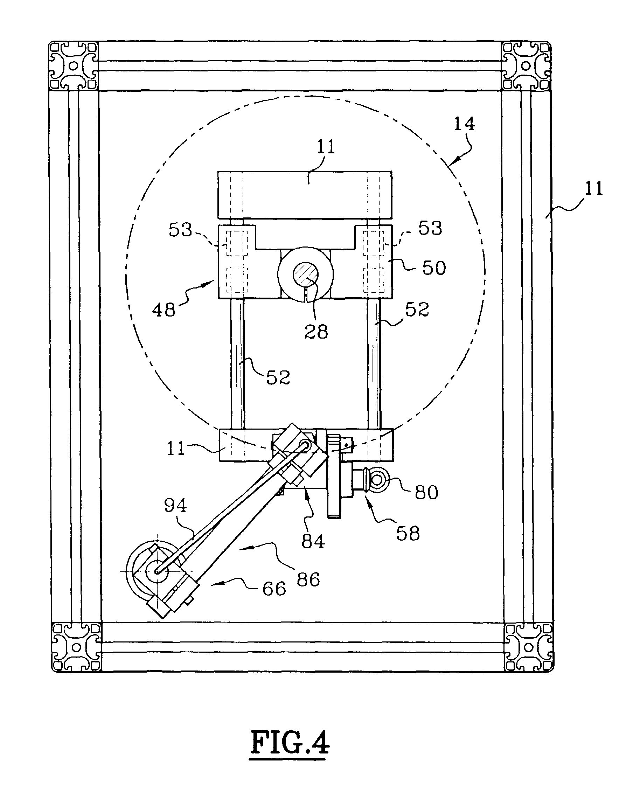

Les moyens 34 de guidage et d'entraînement en translation sont complétés par une platine 48 de translation. Cette platine est détaillée aussi sur les figures 2 et 4. Elle comprend un chariot 50 monté libre en translation sur deux barres 52 de guidage au moyen de douilles 53, en l'occurrence des douilles à recyclage de billes. Les barres 52 sont fixes par rapport au bâti 11.

Le chariot 50 porte l'arbre 28 support du disque grâce à un montage sur roulement à billes qui assure une liberté de mouvement en rotation du disque.

Les moyens 34 de guidage et d'entraînement en translation sont complétés par des moyens 54 de déplacement en rotation du disque pour constituer l'ensemble des moyens 10 de stockage et de présentation.

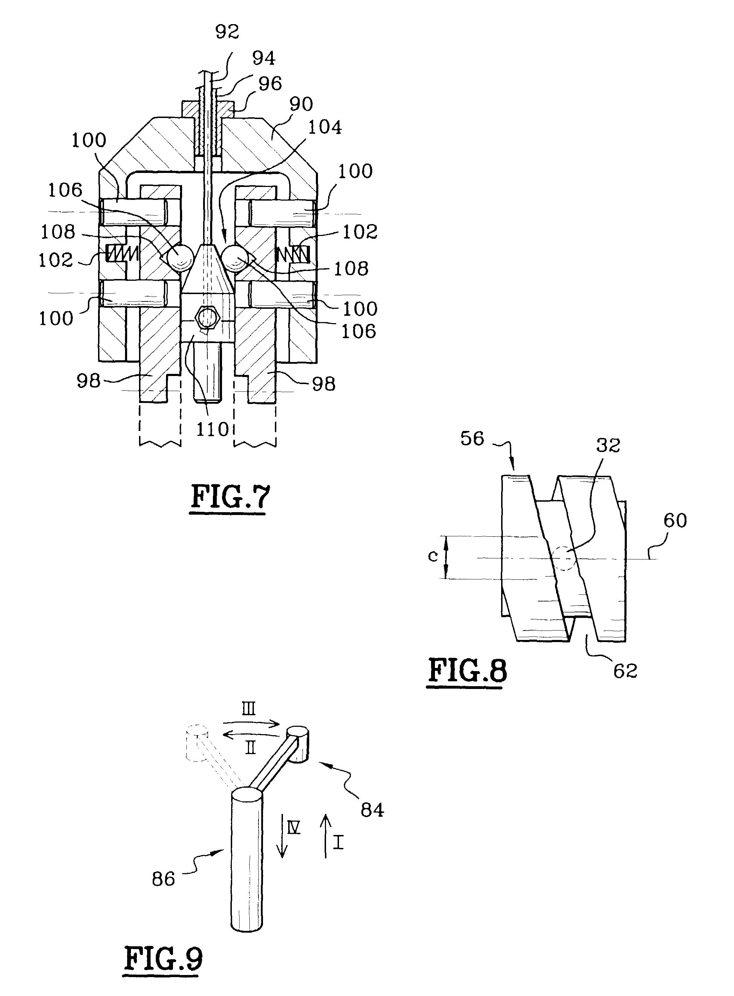

Ces moyens 54 de déplacement en translation comprennent une vis 56, entraînée en rotation par des moyens moteurs 58. Cette vis est représentée en détail sur la figure 8. Son axe 60 de rotation est nécessairement orienté de façon tangente au disque.

Cette vis 56 porte un filet 62 prévu pour recevoir les pions 32 d'entraînement avec un jeu relativement important pour éviter tout frottement important pouvant conduire à un freinage ou une usure prématurée.

Dans une zone c , le filet est rétréci à une cote telle que le jeu est réduit au plus juste pour un fonctionnement précis, cette zone c correspondant à un positionnement précis qui sera explicité ultérieurement dans la description.

Les moyens moteurs 58 sont dérivés de moyens moteurs généraux qui seront explicités plus avant.

Le fonctionnement de ce dispositif 10 de stockage et de présentation de produits unitaire est maintenant décrit.

Le disque 18 est amovible et peut être garni par ailleurs de produits 16 unitaires tels que des ressorts. La première opération consiste à placer le disque 18 sur l'arbre 28 avec une indexation angulaire grâce au logement 33 de centrage.

Cette indexation permet aussi de placer, simultanément à la dépose, la gorge 36 sur le doigt 42 de guidage ainsi que le pion 32 d'entraînement correspondant dans le filet 62 de la vis 56. On choisit pour les besoins de la description le doigt de guidage situé à l'extrémité du chemin 38 en spirale la plus proche du centre et inversement le pion 32 d'entraînement le plus proche de l'extrémité du chemin 26 la plus proche de la périphérie du disque.

Ainsi lorsque la vis, sous l'effet de l'entraînement, tourne, le filet fait tourner le disque. Le pas de la vis et la durée de la rotation sont adaptés en fonction du pas p des pions en sorte de faire avancer le disque angulairement d'un seul pas.

Simultanément à la rotation, le doigt 42 de guidage étant fixe, la gorge étant avec un chemin 38 en spirale, le disque se déplace en translation par l'intermédiaire du chariot 50 qui porte ledit plateau et qui coulisse sur les barres 52.

Ainsi, le premier pion 24 de réception est remplacé par un autre pion 24, ceci exactement au même endroit par rapport au bâti 11 général, ce qui peut permettre la préhension d'un produit unitaire par un manipulateur, toujours au même endroit. Un exemple d'un tel agencement est décrit ultérieurement.

La vis est équipée d'un filet muni d'une zone c qui permet un positionnement précis de la rotation, précision qui est compatible avec la prise par un manipulateur.

Sur la représentation schématique, il est prévu un disque 18 unique mais le support 14 peut être réalisé comme montré sur la figure 2, c'est à dire sous forme de deux disques. En effet, le disque 18-1 supérieur reçoit des plateaux en matière plastique, par exemple thermoformée avec des moyens individuels de réception garnis de produits, les moyens d'indexation assurant un bon positionnement de ces plateaux quant au disque 18-2 inférieur, il comprend sur sa face inférieure la gorge 36 des moyens 34 de guidage et d'entraînement en translation ainsi que les pions 32 d'entraînement prévus pour coopérer avec les moyens 54 de déplacement en rotation. Les deux disques sont fixés sur le même arbre 28 et indexés de façon déterminée et définitive.

Il est à remarquer que, dans le cas présent qui prévoit un dispositif de stockage et de présentation avec un support du type disque, les plateaux en matière plastique, même de faible épaisseur, sont beaucoup plus rigides. En effet, il n'y a pas de lignes naturelles de pliage car ces lignes de pliage sont rayonnantes, contrairement à un plateau de forme rectangulaire où il existe des lignes de pliage naturelles suivant l'axe transversal. De plus, la saisie est facilitée et sûre puisqu'elle ne peut se faire qu'au moins en deux points diamétralement opposés et la prise n'engendre aucune ligne de pliage simple.

Un mode de réalisation d'un dispositif de transfert est maintenant décrit, ce dispositif de transfert intégrant le dispositif de stockage et de présentation ci-dessus.

Cette intégration est essentiellement obtenue par une motorisation commune de l'ensemble des éléments motorisés.

Le bâti général 11 intègre un moto-réducteur 64 ainsi qu'un manipulateur 66.

Le moto-réducteur est accouplé à un arbre 68 principal par l'intermédiaire d'un accouplement 70.

Il est prévue une chaîne 72 de distribution entraînée par un pignon 74 solidaire d'une came 76, coaxiale, coopérant avec une croix de malte 78. Cette croix de malte assure la rotation d'un arbre 80 d'entraînement constituant la source motrice des moyens moteurs 58 du dispositif de stockage et de présentation selon l'invention.

Un tendeur de chaîne 82 est prévu dans une position géométrique adaptée en fonction des constituants à éviter.

Le manipulateur 66 comprend une tête 84 de préhension montée à l'extrémité de la branche horizontale d'un bras support 86, en L renversé, et des moyens 88 de mise en mouvements synchronisés.

La tête 84 de préhension est détaillée sur la figure 7. Cette tête comprend une embase 90 en U renversé, fixée à l'extrémité de la branche horizontale du bras support 86. Cette embase est percée en partie supérieure pour laisser passer un câble 92 de manoeuvre coulissant dans une gaine 94 elle-même en butée sur une butée 96 réglable.

Cette tête comprend en outre deux supports 98 de mors, esquissés en trait discontinu, à la forme du produit unitaire à saisir, ces supports étant montés libres en translation sur deux paires 100 d'ergots. Des moyens 102 de rappel élastique sont interposés entre l'embase et chacun des supports de mors en sorte de presser les deux supports de mors l'un vers l'autre. Des moyens 104 d'écartement sont prévus sous la forme de deux billes 106 disposées dans deux logements 108 borgnes ménagés dans lesdits supports et faisant saillie pour venir en appui sur un noyau 110 conique solidaire du câble 92 de manoeuvre.

Ainsi lorsqu'un effort de traction est exercé sur le câble 92, celui-ci tire sur le noyau qui en remontant écarte les billes 106 qui repousse les supports 98 de mors pour lâcher le produit tandis que le relâchement de la traction sur le câble provoque l'effet inverse de serrage du produit lors de la préhension. On note qu'un tel agencement est à sécurité positive.

Le bras support du manipulateur 66 comprend un bras support 86, en L renversé dont la branche horizontale porte la tête de préhension et dont la branche verticale est entraînée par des moyens 88 de mise en mouvements synchronisés suivant un cycle donné.

Ces moyens de mise en mouvements synchronisés comprennent un ensemble 112 de mise en rotation avec effet d'ascenseur et un ensemble 114 de rappel en position.

L'ensemble 112 de mise en rotation comprend un cylindre 116 mobile en rotation, muni de deux rampes 118 symétriques, coopérant avec deux axes 120 diamétralement opposés portant des roulements pour obtenir un mouvement à frottements limités. Ce cylindre 116 est libre en rotation par rapport à la branche verticale du bras support 86 et fixe en translation par rapport au bâti 11.

En pied de la branche verticale, il est prévu un boîtier 122 de rappel, fixe par rapport au bâti qui comprend des moyens 124 de rappel élastique de la branche, travaillant à la torsion.

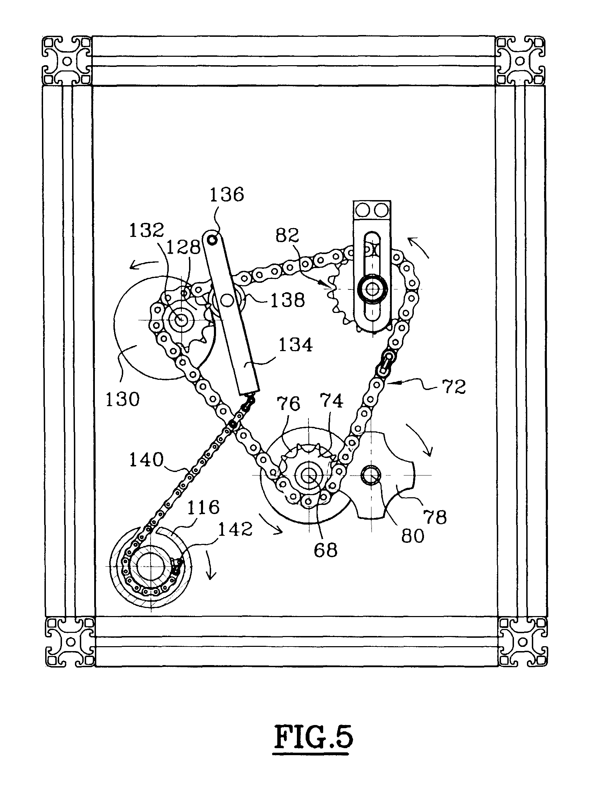

Les moyens 88 de mise en mouvements synchronisés sont entraînés à partir d'un mécanisme 126 de manoeuvre alternative. Ce mécanisme comprend un pignon 128, solidaire de l'arbre moteur 68, qui entraîne la chaîne 72 de distribution, voir figure 5, et une came 130 coaxiale, tous deux solidaires d'un arbre 132. Un levier 134 est monté pivotant autour d'un axe 136 et porte un galet 138, libre en rotation et situé entre ce point de pivotement et l'extrémité libre dudit levier.

Ce galet est en appui sur la came 130. Le levier est solidaire par son extrémité libre d'une chaîne 140 dont l'autre extrémité est fixée, après enroulement partiel autour du cylindre 116, sur ce cylindre 116 en un point 142, en sorte de l'entraîner en rotation.

L'ensemble est complété par un moyen 144 de rappel élastique de compression, interposé entre le cylindre et les axes 120 coopérant avec les rampes 118, en sorte de rappeler la branche verticale vers le bas.

Le fonctionnement de l'ensemble 112 de mise en rotation est décrit ci-après et reproduit les mouvements indiqués figure 9. Le bras support 86 est en position basse I et un produit est saisi par la tête de préhension 84. La rotation de la chaîne de distribution fait tourner la came 130 qui écarte le levier 134 par pivotement autour de l'axe 136. Le levier en s'écartant tire sur la chaîne 140 qui met en rotation le cylindre 116. La rotation du cylindre 116 provoque la montée de la branche verticale du bras support, sans rotation car le moyen 124 de rappel élastique, travaillant à la torsion l'interdit.

Lorsque le cylindre a tourné d'un angle suffisant, les axes 120 avec leurs roulements viennent en butée sur le fond de rampe. C'est la fin de cette première étape qui consiste en une montée.

L'étape II est une rotation qui résulte de la rotation supplémentaire du cylindre 116 qui entraîne les axes 120 en rotation, donc la branche verticale du bras support 86, ceci en bandant le moyen 124 de rappel élastique travaillant à la torsion.

Lorsque le levier 134 est dans sa position d'écartement maximum engendrée par le profil de came, la rotation prévue est terminée.

Le manipulateur peut alors décharger le produit saisi par écartement des supports de mors de la tête de préhension.

L'étape III consiste à laisser travailler le moyen 124 de rappel élastique ramène par rotation la branche verticale du bras support 86. Ceci est rendu possible car le profil de la came 130 laisse le levier 134 libre.

L'étape IV consiste à laisser les axes 120 rouler dans les rampes sous l'effort vers le bas exercé par le moyen 144 de rappel élastique de compression.

Les moyens 88 de mise en mouvements synchronisés sont revenus dans la position initiale.

Il convient maintenant de préciser le fonctionnement du câble de traction 92 de la tête de préhension.

Cet ensemble gaine/câble passe à travers la branche verticale du bras 86 support pour permettre une rotation aisée dudit bras sans problème de torsion de cet ensemble.

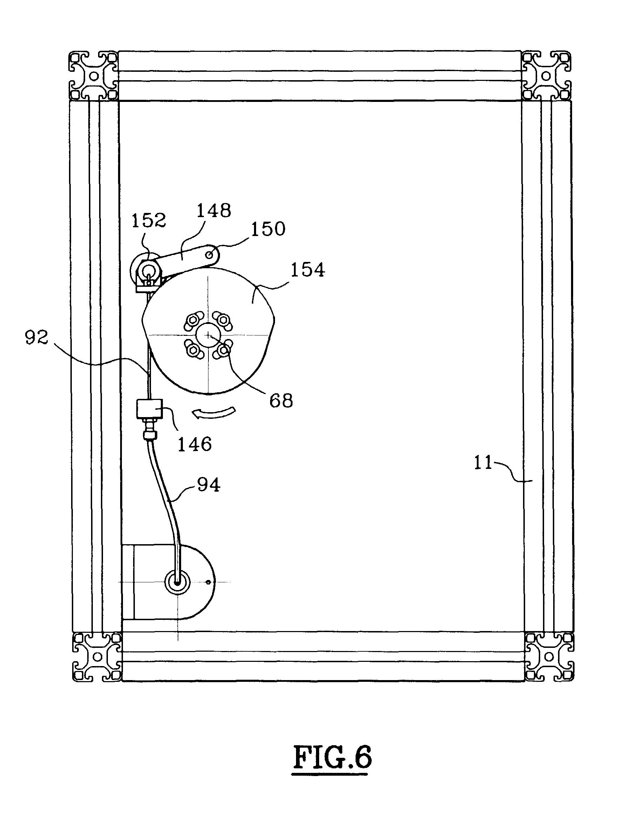

La gaine 94 vient en butée par son extrémité libre dans un bloc 146 comme montré en détail sur les figures 2 et 6.

Le câble 92 est solidaire par son extrémité libre d'un levier 148 mobile en rotation autour d'un axe 150. Un galet 152 vient en appui sur une came 154 entraînée en rotation par l'arbre d'entraînement principal 68.

Ainsi que cela vient d'être décrit, le dispositif de transfert selon l'invention intègre le dispositif de stockage et de présentation de produits et le moto-réducteur selon l'invention assure l'entraînement de l'ensemble des pièces en mouvement et on peut aussi noter la compacité qui en découle.

De plus, la synchronisation est parfaite puisqu'elle est assurée par des cames et des entraînements mécaniques à partir du moto-réducteur unique.

## Revendications

1. Dispositif de stockage et de présentation de produits (16) unitaires tels que des ressorts, muni de moyens (22) individuels de réception de ces produits (16), disposés suivant un chemin (26) en forme de spirale centrée par rapport à l'axe de rotation passant par le centre du support, lesdits moyens individuels étant espacés le long de ce chemin (26) avec un pas p, caractérisé en ce qu'il comprend un support (14) mobile en rotation et en translation.

2. Dispositif de stockage et de présentation selon la revendication 1, caractérisé en ce qu'il comprend des moyens (32, 56) d'entraînement en rotation pas à pas et des moyens (34) de guidage et d'entraînement en translation du support (14).

3. Dispositif de stockage et de présentation selon la revendication 2, caractérisé en ce que les moyens d'entraînement en rotation pas à pas comprennent des pions (32) d'entraînement au pas p, disposés sous la face (30) inférieure du support (14), suivant un chemin (26) en forme de spirale centrée par rapport à l'axe de rotation passant par le centre du support (14), ces pions (32) d'entraînement étant prévus pour coopérer avec une vis (56) d'entraînement.

4. Dispositif de stockage et de présentation selon la revendication 2, caractérisé en ce que les moyens (34) de guidage et d'entraînement en translation du support sont composés d'une gorge (36) ménagée sur la face inférieure (30) du support, suivant un chemin (38) en forme de spirale, centrée avec l'axe de rotation passant par le centre du disque et décalée par rapport au chemin (26) en forme de spirale et d'un doigt (42) de guidage, fixe.

5. Dispositif de stockage et de présentation selon l'une quelconque des revendications précédentes, caractérisé en ce que le support (14) est monté sur un arbre (28) libre en rotation lui-même porté par une platine (48) de translation, libre en translation.

6. Dispositif de stockage et de présentation selon l'une quelconque des revendications précédentes, caractérisé en ce que le support (14) comprend un disque (18) et une feuille mince amovible reçue sur ce disque et munie des moyens (22) individuels de réception des produits (16) unitaires.

7. Dispositif de stockage et de présentation selon l'une quelconque des revendications précédentes, caractérisé en ce que le support (14) comprend un disque (18-1) supérieur et un disque inférieur (18-2), portés par le même arbre et indexés et fixe en rotation l'un par rapport à l'autre.

8. Dispositif de transfert intégrant un dispositif de stockage et de présentation selon l'une quelconque des revendications précédentes, caractérisé en ce qu'il comprend un bâti (11), un moto-réducteur (64), des moyens (72), communs d'entraînement, un manipulateur (66) muni d'une tête (84) de préhension.

9. Dispositif de transfert selon la revendication 8, caractérisé en ce que les moyens communs d'entraînement comprennent un pignon (74) mené, une chaîne (72) de distribution, une came (76) coaxiale audit pignon mené qui coopère avec une croix de malte (78) qui entraîne le support (14), un pignon (128) menant qui engrène avec ladite chaîne de distribution, solidaire de moyens (88) de mise en mouvements synchronisés du manipulateur (66) en translation verticale et en rotation.

10. Dispositif de transfert selon la revendication 9, caractérisé en ce que les moyens (88) de mise en mouvements synchronisés comprennent des moyens (130, 134, 140) de mise en rotation d'un cylindre (116) munis d'au moins une rampe (118) prévue pour recevoir un axe (120) solidaire du manipulateur (66) en sorte de déplacer le manipulateur entre deux positions haute et basse et deux positions angulaires, d'un moyen (124) de rappel élastique travaillant à la torsion, solidaire du manipulateur, d'un moyen (144) de rappel élastique travaillant à la compression interposé entre le bâti (11) et le manipulateur (66).
